# EUROPÄISCHE PATENTSCHRIFT

(11) **EP 3 514 477 B1**
(45) Veröffentlichungstag und Bekanntmachung des Hinweises auf die Patenterteilung: **07.04.2021**
(21) Anmeldenummer: 18152808.4
(22) Anmeldetag: 22.01.2018
(51) Int. Cl.: F41H 13/00, F41G 7/22, G01S 7/495

(54) **SYSTEM UND VERFAHREN ZUM STÖREN EINER ZIELERFASSUNG**
SYSTEM AND METHOD FOR INTERFERING WITH A DETECTION OF A TARGET
SYSTÈME ET PROCÉDÉ DE PERTURBATION D'UNE DÉTECTION DE CIBLES

(43) Veröffentlichungstag der Anmeldung: 24.07.2019
(73) Patentinhaber: HENSOLDT Sensors GmbH, 82024 Taufkirchen (DE)
(72) Erfinder: THUM-JÄGER, Andrea, 85375 Neufahrn bei Freising (DE); RUDOW, Oliver, 85521 Ottobrunn (DE); MARTIN, Ulrich, 82024 Taufkirchen (DE)
(74) Vertreter: LifeTech IP Spies & Behrndt Patentanwälte PartG mbB

(56) Entgegenhaltungen:
- EP-A1- 0 665 445
- WO-A1-2005/045465
- US-A1- 2017 192 089

## Beschreibung

Die vorliegende Erfindung bezieht sich auf ein System und auf ein Verfahren zum Stören einer Zielerfassung und insbesondere auf ein optisches System zur Verhinderung einer kontinuierlichen Zielverfolgung.

### Hintergrund

Lenkflugkörper mit halbautomatischer Steuerung (sogenannte SACLOS; semiautomatic command to line of sight) stellen eine Bedrohung insbesondere von Landfahrzeugen aber auch von langsam fliegenden Plattformen wie beispielsweise Helikopter dar. Bei solchen Lenkflugkörpern nimmt beispielsweise ein Schütze das Ziel mittels einer Zieloptik ins Visier und lenkt den Lenkflugkörper ins Ziel. Die Zieloptik kommuniziert mit der Steuerelektronik des Lenkflugkörpers und übermittelt notwendige Lenkkommandos. Der Schütze verfolgt dabei kontinuierlich sein Ziel, wobei er dafür einen ständigen Sichtkontakt zum Flugkörper aufrechterhält. Die Kommunikation mit dem Lenkflugkörper kann beispielsweise über einen Draht erfolgen. Bei weiteren Systemen ist es jedoch ebenfalls möglich, die Verbindung mittels Funk, Radar oder Laser aufrechtzuerhalten. Im letzteren Fall handelt es sich um sogenannte Laserstrahlreiter (sogenannte beam rider). Bei diesen Lenkverfahren erfolgt somit eine direkte Steuerung durch den Schützen, der wie gesagt das Ziel mittels einer Zieloptik ins Visier nimmt und entsprechend den Lenkflugkörper in das gewünschte Ziel lenkt. Eine solche Zielerfassung durch eine Gegenseite stellt eine Bedrohung dar, die möglichst unterbunden werden soll.

Um dieser Bedrohung zu begegnen, gibt es eine Reihe von konventionellen Systemen, die nicht-letal sind und für den direkten Einsatz auf eine kurze Strecke gedacht sind. US 6,007,218 und US 6,190,022 offenbaren beispielweise Laser- oder LED-Systeme, die durch ein Blenden oder Verblitzen eine vorrübergehende Sehbeeinträchtigung hervorrufen. US 7,040,780 offenbart eine Laserwaffe, die mehrere Laserquellen aufweist, diese überlagert und gezielt in bestimmten Regionen eine Blendwirkung erzielt.

In EP 0 665 445 ist eine Einrichtung zur Abwehr eines angreifenden Flugkörpers offenbart, die eine Laserquelle als Abwehrstrahl nutzt. US 2010/0126335 A1 offenbart ein weiteres bekanntes Laser-basiertes Abwehrsystem, welches direkt auf einen Angreifer einen Laser ausrichtet.

Die dort offenbarten Systeme sind jedoch unzureichend und es besteht ein Bedarf nach alternativen Systemen, die nicht nur zuverlässig und autark eine Zielerfassung oder eine kontinuierliche Zielverfolgung durch eine Gegenseite detektieren, sondern diese auch entsprechend unterdrücken oder zumindest stören.

### Zusammenfassung

Zumindest ein Teil der obengenannten Probleme wird durch ein System nach Anspruch 1 und einem Verfahren nach Anspruch 8 gelöst. Die abhängigen Ansprüche definieren weitere vorteilhafte Ausführungsformen für das System.

Die vorliegende Erfindung bezieht sich auf ein System nach Anspruch 1, das zum Stören einer Zielerfassung geeignet ist, die von einer Position ausgeht und durch einen Detektor detektierbar ist. Der Detektor stellt ansprechend auf die Zielerfassung ein Detektionssignal bereit. Das System umfasst:
- eine Warneinrichtung zum Ausgeben einer Warnung basierend auf dem Detektionssignal (z.B. wenn der Detektor ein Detektionssignal ausgibt);
- einen optischen Störer, der ausgebildet ist, um zumindest ein Störsignal bereitzustellen; und
- eine Richteinrichtung, die ausgebildet ist, um in Antwort auf die ausgegebene Warnung das Störsignal auf die Position zu richten, um die Zielerfassung zu verhindern oder zumindest zu erschweren.

Die Position kann dabei ein Ort oder eine Stelle eines Objektes oder eines Mensehen oder eines Gerätes sein, der/das die Zielerfassung ausführt. Die Position kann insbesondere ein Ort einer Zieloptik oder eines optischen Systems sein, das sich in einer bestimmten Entfernung und Richtung zu dem System befindet.

Erfindungsgemäß ist der optische Störer ausgebildet, um ein multispektrales Lichtsignal, insbesondere ein gepulstes oder ein kontinuierliches Lasersignal, als Störsignal bereitzustellen, wobei der optische Störer das Störsignal mit Wellenlängen bereitstellt, die durch schaltbare Wellenlängen (beliebig) variierbar sind (z.B. durch bestimmte Filter). Das multispektrale Lichtsignal umfasst beispielsweise mehrere Farben, kann aber auch einen spektralen Anteil aus dem nicht sichtbaren Bereich umfassen (wie z.B. ein Infrarotlicht aus dem nahen oder mittleren oder fernen Infrarot).

Optional ist der optische Störer ausgebildet, das Störsignal mit einer Wellenlänge oder Intensität oder Pulsrate bereitzustellen, die zu einer Reduktion des Kontrastes bei der Zielerfassung führt. Als Folge kann der Schütze das potentielle Ziel nicht mehr erkennen. Falls eine Kamera zur Zielerfassung genutzt wird, wird diese überblendet oder auf dem Bild sind wegen mangelndem Kontrast keine Strukturen mehr erkennbar.

Erfindungsgemäß umfasst das System außerdem eine Einrichtung zur Bestimmung eines spektralen Bereiches einer Strahlung aus einem räumlichen Bereich (z.B. einen Spektralanalysator). Der erfasste räumliche Bereich liegt gegenüberliegend zu einer Richtung, in die die Richteinrichtung in der Lage ist, das Störsignal auszurichten. Dadurch wird also der Hintergrund spektral erfasst. Außerdem kann der optische Störer in Abhängigkeit des bestimmten spektralen Bereiches das Störsignal ändern (z.B. in dem gleichen spektralen Bereich abstrahlen). Dadurch kann eine Tarnung vor dem Hintergrund erreicht werden.

Optional umfasst das System weiter eine Entfernungsmesseinrichtung, die ausgebildet ist, um eine Entfernung zu der Position der Zielerfassung zu ermitteln. Der optische Störer kann ausgebildet sein, um in Abhängigkeit der gemessenen Entfernung das Störsignal zu ändern. Beispielsweise kann dadurch die Intensität angepasst werden, um die Augen des potentiellen Schützens nicht zu schädigen. Optional ist es ebenfalls möglich, die Position bzw. den Ort des Schützens zu bestimmen (z.B. durch ein zusätzliches Erfassen des Azimuts- und Elevationswinkels). Der Entfernungsmesser kann außerdem vor dem Stören der Zielerfassung die Entfernungsmessung durchführen und basierend auf der ermittelten Entfernung kann z.B. die Intensität, Farbe, etc. des Störsignals angepasst werden, um eine Augensicherheit des potentiellen Schützens zu gewährleisten.

Optional ist die Richteinrichtung ausgebildet, um stationäre oder fliegende oder sich bewegende Objekte während ihrer Bewegung zu verfolgen und das Störsignal über eine Mindestzeitdauer auf das bewegte Objekt zu richten. Außerdem kann die Richteinrichtung ausgebildet sein, durch eine Strahlablenkung einen Ort von zumindest einer Komponente des Systems zu verschleiern.

Optional ist der Detektor ein Bestandteil des Systems.

Optional umfasst das System oder der Detektor zumindest eine der folgenden Komponenten:
- einen Mündungsfeuerdetektor,
- einen Flugkörperwarner zur Detektion anfliegender Flugobjekte,
- einen Laserwarner zur Detektion lasergelenkter Flugkörper,
- ein scannendes Lasersystem zur Detektion von Visiereinrichtungen durch Rückreflektionen eines ausgesandten Laserstrahls.

Optional ist das scannende Lasersystem ausgebildet, seinen Laserstrahl als Störsignal für das System bereitzustellen. Es ist ebenfalls möglich, dass der optische Störer, die Richteinrichtung und der Detektor das scannende Lasersystem bilden. Das scannende Lasersystem kann weiter ausgebildet sein, um periodisch eine Region durch einen Laserscan abzutasten, und der Detektor kann ausgebildet sein, um eine Rückreflektion während des Laserscans von einem optischen Gerät, das potentiell zur Zielerfassung genutzt wird, als Detektionssignal zu erkennen.

Ausführungsbeispiele der vorliegenden Erfindung beziehen sich auch auf ein Verfahren zum Stören einer Zielerfassung mach Anspruch 10, die von einer Position ausgeht und durch einen Detektor detektierbar ist. Der Detektor gibt wieder ansprechend auf die Zielerfassung ein Detektionssignal aus.

Ausführungsbeispiele der vorliegenden Erfindung stellen somit eine komplette automatische Abwehrkette bereit, um eine Zielerfassung zu stören oder unmöglich zu machen. Ausführungsbeispiele lösen zumindest einen Teil der oben genannten technischen Probleme dadurch, dass ein Schütze oder ein optisches Aufnahmesystem (z.B. eine Kamera) durch flackerndes oder farblich variierendes Licht irritiert wird und so eine genaue Zielverfolgung unmöglich gemacht wird.

Das automatische System mit dem optischen Störer umfasst dazu das Warnsystem zur Erkennung der Bedrohung, beispielsweise einen multispektralen Laser oder eine multispektrale Lichtquelle (wie beispielsweise ein multispektrales LED-Array) als Strahlungsquelle und außerdem ein Richtsystem, welches in der Lage ist, die Lichtquelle einzuweisen und auszurichten, so dass durch eine geeignete Modulation des beispielhaften Laserlichts der Schütze oder optische Zielerfassungssystem zumindest irritiert wird und an der genauen Zielverfolgung gehindert wird.

Vorteile von Ausführungsbeispielen ergeben sich insbesondere daraus, dass das multispektrale Licht des Störsignals den Kontrast der Szenerie (die der Schütze oder das optische Zielerfassungssystem sieht) soweit absenkt, dass die Zielverfolgung unmöglich wird. Dies wird insbesondere durch die folgenden Eigenschaften erreicht/sichergestellt:
- Die Lichtfarben wechseln ständig, sodass es unmöglich ist, eine bestimmte Farbe auszublenden (z.B. durch ein entsprechendes Filter).
- Der ständige Farbwechsel hat eine verstärkende Wirkung auf die Kontrastreduktion oder die Blendwirkung.
- Durch das multispektrale Licht wird es ebenfalls möglich, unterschiedliche spektrale Bereiche abzudecken, wie beispielsweise das sichtbare Lichtspektrum, das nahe Infrarot oder das mittlere Infrarot oder andere Bereiche. Damit können auch Kameras oder andere optische Erfassungsgeräte, die in anderen Spektralbereichen arbeiten, über die Blendwirkung an der optischen Erfassung gehindert werden.

### Kurzbeschreibung der Figuren

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein System zum Stören einer Zielerfassung gemäß einem Ausführungsbeispiel der vorliegenden Erfindung.
- Fig. 2: veranschaulicht eine mögliche Einsatzvariante des Systems, bei der eine Zielerfassung durch einen Schützen vorgenommen wird.

### Detaillierte Beschreibung

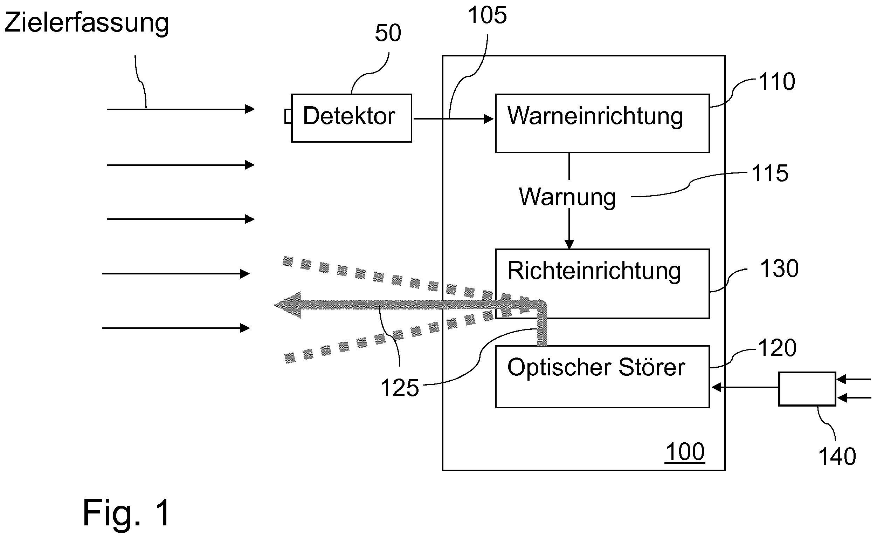

**Fig. 1** zeigt ein System 100 zum Stören einer Zielerfassung gemäß einem Ausführungsbeispiel der vorliegenden Erfindung. Die Zielerfassung erfolgt von einer Position aus und ist durch einen Detektor 50 detektierbar. Der Detektor 50 stellt ansprechend auf die Zielerfassung ein Detektionssignal 105 bereit. Das System 100 umfasst: eine Warneinrichtung 110 zum Ausgeben einer Warnung 115, einen optischen Störer 120 und eine Richteinrichtung 130. Die Warneinrichtung 110 weist einen Eingang für das Detektionssignal 105 des Detektors 50 auf. Der optische Störer 120 ist ausgebildet, um zumindest ein Störsignal 125 bereitzustellen, und die Richteinrichtung 130 ist ausgebildet, um das Störsignal 125 in Antwort auf die ausgegebene Warnung 115 auf die Position der Zielerfassung zu richten, um die Zielerfassung zu verhindern oder zumindest zu erschweren.

Optional kann eine Einrichtung 140 zur Bestimmung eines spektralen Bereiches einer Strahlung aus einem räumlichen Bereich vorgesehen sein (als Teil des Systems 100 oder separat), wobei der räumliche Bereich insbesondere den Hintergrund umfasst, d.h. jenen Bereich, der gegenüberliegend zu dem Bereich ist, aus dem die Zielerfassung erfolgt. Die Einrichtung 140 kann insbesondere einen Spektralanalysator oder ein optisches Aufnahmegerät (z.B. eine Kamera) umfassen, der/die in der Lage ist, das Spektrum des Hintergrundes (in Richtung der Zielerfassung) zu bestimmen. Basierend auf der Analyse der Einrichtung 140 kann der optische Störer 120 das Störsignals 125 spektral an den Hintergrund anpassen, so dass eine effektive Tarnung erfolgt (der potentielle Schütze sieht im Wesentlichen nur noch Hintergrund).

Die Warneinrichtung 110 dient zur Erkennung der Bedrohung und umfasst beispielsweise zumindest einen der folgenden Warner: einen Flugkörperwarner, einen Laserwarner, einen sogenannten Sniper-Detektor. Bei weiteren Ausführungsbeispielen ist dazu der Detektor 50 ein Teil der Warneinrichtung 110 und löst somit einen Warnung 115 aus, um das System 100 automatisch zu veranlassen, das Störsignal 125 zu senden. Das Warnsystem 110 kann aber auch mit der Aktivierung des optischen Störeres 120 / der Richteinrichtung 130 warten, um zunächst eine Abschätzung der Bedrohungslage zu ermöglichen (z.B. durch eine visuelle Inaugenscheinnahme) und erst auf eine Bestätigung das Aussenden des Störsignals 125 zu veranlassen.

Das System 100 kann eine optionale Entfernungsmesseinrichtung (in der Fig. 1 nicht gezeigt) aufweisen. Die optionale Entfernungsmessung kann ständig oder bei Bedarf den Abstand zur Bedrohung (zur Visieroptik) überwachen und die Blendwirkung adaptiv auf die Entfernung einstellen.

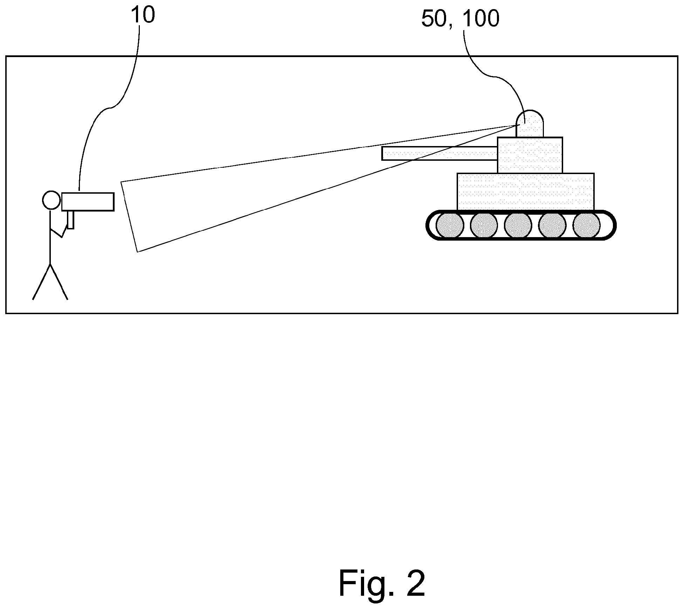

**Fig. 2** zeigt eine mögliche Einsatzvariante des Systems 100, bei der eine Zielerfassung durch einen Schützen oder einer Visiereinrichtung 10 vorgenommen wird. Nachdem der Detektor 50 die Zielerfassung detektiert hat, kann eine Störung des Schützens 10 erfolgen, um so die Zielverfolgung des Schützens 10 zu verhindern. Wie zuvor dargelegt, alarmiert dazu die Warneinrichtung 110 den optischen Störer 120, der daraufhin das Störsignal 125 erzeugt und mittels der Richteinrichtung 130 in Richtung des Schützens 10 ausrichtet, um diesen an der Zielverfolgung abzuhalten (die einzelnen Komponenten sind in der Fig. 2 nicht dargestellt).

Der optische Störer 120 umfasst als Licht- oder Strahlungsquelle gemäß Ausführungsbeispielen beispielsweise einen multispektralen Laser oder eine multispektrale LED oder ein LED-Array, die ein integraler Bestandteil des Systems 100 sein können. Es ist aber auch möglich eine externe Strahlungsquelle zu nutzen. Der optische Störer 120 kann auch eine entsprechende Steuerelektronik umfassen, um das Licht geeignet zu modulieren.

Die Lichtquelle in dem optischen Störer 120 kann beispielsweise so moduliert werden, dass eine Blendwirkung, ein Tarneffekt (Verschwinden aller Kontraste vor einem Hintergrund), eine Irritation oder andere Effekte (z.B. Übelkeit) beim Schützen hervorgerufen werden, wodurch eine Zielverfolgung unmöglich gemacht oder zumindest erschwert wird. Es ist ebenfalls möglich, die Wellenlänge des optischen Störers 120 zu variieren, was zu verschiedenen farblichen Lichtsignalen führt und Gegenmaßnahmen wie z.B. Laserschutzbrillen erschweren. Wenn die Wellenlänge des Störsignals ständig variiert wird, müsste ein breitbandiger Filter genutzt werden, der dazu führt, dass letztendlich alles Licht herausgefiltert werden müsste und der Schütze keinen Sichtkontakt mehr hätte.

Es ist ebenfalls möglich, dass der Ort der Richteinrichtung 130 bzw. des optischen Störers 120 verschleiert wird. Insbesondere kann eine aktive Tarnung erfolgen, zum Beispiel durch eine Strahlablenkung (sogenanntes Scanning oder Switching). So kann z.B. das Störsignal 125 von verschiedenen Positionen gleichzeitig oder zeitlich nacheinander konstant oder zeitlich veränderlich abgestrahlt wird.

Es ist aber nicht zwingend erforderlich, dass die Zielerfassung (oder Zielverfolgung) durch einen Schützen 10 erfolgt. Die Zielerfassung oder Zielverfolgung kann auch durch eine Visiereinrichtung oder eine optische Aufnahmeeinrichtung wie beispielsweise eine Kamera erfolgen, ohne dass dabei eine menschliche Interaktion erforderlich wäre.

Das Richtsystem 130 dient zum Einweisen und Ausrichten des Störsignals 125. Insbesondere kann das Ausrichten des Störsignals 125 auf das erkannte Ziel 10 (potentielle Schütze) mittels des Richtsystems 130 automatisch erfolgen. Die Richteinrichtung 130 ist beispielsweise ausgebildet, um das Störsignal 125 auf eine Visieroptik einer beispielhaften Waffenanlage auszurichten, um dort die Blendwirkung zu erreichen, und zwar unabhängig davon, ob hinter der Visieroptik 10 ein Schütze oder ein Kamerasystem angeordnet ist.

Bei Ausführungsbeispielen ist die Richteinrichtung 130 und/oder das Störsignal 125 ausgebildet, um die Blendwirkung bei dem Schützen bzw. bei der genutzten optischen Aufnahmeeinrichtung zu erreichen. Die Blendwirkung kann beispielsweise eine Reizüberhöhung oder eine Wegnahme des Reizes beispielsweise durch ein moduliertes Signal bewirken. Das hat zur Folge, dass der Kontrast der gesamten Szenerie zumindest reduziert wird. Damit ist auch der beispielhafte Schütze oder die optische Aufnahmeeinrichtung nicht mehr in der Lage, das Ziel zu erkennen und zu verfolgen. Es ist ebenfalls möglich, das Störsignal 125 derart zu wählen, dass es zu einer Unkonzentriertheit beim Schützen führt. Als Folge kann der Schütze sein Ziel während des Angriffes nicht mehr permanent verfolgen, so dass der Angriff abgebrochen werden muss.

Die Modulation (z.B. eine sich ändernde Helligkeit, Farbe, Pulsfrequenz, etc.) des Störsignal 125 bewirkt, das dadurch das Auge oder die Kamera ständig gezwungen wird, den eigenen Empfangsbereich an die entsprechende Lichtquelle anzupassen. Dies führt bei Kameras beispielsweise dazu, dass die Verstärkung des Empfängers heruntergeregelt oder hochgeregelt wird. Das Hochregeln kann beispielsweise dadurch ausgelöst werden, dass das Störsignal zwischenzeitlich ausgeschaltet wird. Solche Wechsel können ständig vorgenommen werden, sodass das System bzw. das Auge des Schützens ständig nachreguliert werden muss. In jedem Fall kann damit erreicht werden, dass das eigentliche Ziel nicht mehr erfassbar ist. Aber auch ohne diese wechselnden Bedingungen macht die Kontrastreduktion die Zielerfassung unmöglich.

Der beispielhafte Spektralanalysator 140 erfasst den potentiellen Hintergrund und ermittelt die spektrale Verteilung der Wellenlängen des Hintergrundes (Spektralanalyse), den der Schütze 10 sieht, wobei der Hintergrund in einer entgegengesetzten Richtung zur Abstrahlrichtung des Störsignals 125 liegt. Basierend darauf kann das Störsignal 125 radiometrisch an den Hintergrund anpasst werden, so dass permanent eine Kontrastreduktion zum Hintergrund erreicht wird. Dadurch kann das Störsignal 125 adaptiv auf den Hintergrund (spektral) angepasst werden, sodass das Störsignal 125 eine gleiche oder ähnliche Wellenlänge wie eine spektrale Komponente der Hintergrundstrahlung hat (z.B. in einem spektralen Bereich, der vorwiegend im Hintergrund vorhanden ist). Damit kann das System bzw. das Objekt (z.B. ein Luftfahrzeug, Wasserfahrzeuge oder Landfahrzeuge), auf dem das System installiert ist, vor dem Hintergrund nicht oder schwer erkannt werden.

Bei weiteren Ausführungsbeispielen kann die Kontrastreduktion über einen längeren Zeitraum oder permanent erfolgen, insbesondere in einem bestimmten Spektralbereich. Zum Beispiel ist es möglich, im UV oder im blauen Spektralbereich ständig das Störsignal eingeschaltet zu lassen, um den Kontrast einer Plattform vor dem Himmel oder dem Wasser zu reduzieren (z.B. für Flugobjekte oder Schiffe).

Bei weiteren Ausführungsbeispielen ist es ebenfalls möglich, Scharfschützen oder Schützen an RPGs (raketenangetriebene Granaten) mit dem Störsignal zu irritieren, so dass dessen Sichtlinie zum Ziel versperrt ist oder aufgrund des mangelnden Kontrastes durch das Störsignal eine Zielerfassung unmöglich gemacht wird.

Außerdem ist es möglich, ganz gezielt ein bestimmtes flackerndes (z.B. als ein Muster) oder farblich variierendes Licht als Störsignal zu nutzen, welches eine Blendwirkung hat bzw. zumindest den Schützen irritiert.

Bei weiteren Ausführungsbeispielen ist das System 100 mit dem optischen Störer 120 Teil eines Schutzsystems mit einer integrierten Zielerkennung, die automatisch folgende Funktionen bereitstellt:
- Erkennung eines Scharfschützens durch einen Detektor 50, der beispielsweise das Mündungsfeuer des Gewehrs detektiert (sogenannte Muzzle Fire Detector),
- Erkennung eines Scharfschützens durch ein scannendes Lasersystem, das beispielsweise Rückreflektionen des Zielfernrohrs nutzt, um den Schützen zu erkennen (sogenannte Sniper-Detektoren oder Glint-Detektoren),
- Erkennung einer Waffenanlage durch ein scannendes Lasersystem, welches wiederum Rückreflektionen der Visieroptik nutzt (sogenannte Glint-Detektoren),
- Erkennung eines anfliegenden gelenkten Luftkörpers mittels eines Flugkörperwarners, und
- Erkennung eines lasergelenkten Flugkörpers (sogenannte Strahlreiter) mittels Laserwarner.

Das Erkennen eines Scharfschützens durch das scannende Lasersystem kann beispielsweise derart erfolgen, dass das Lasersystem nur zum Erkennen des Scharfschützens genutzt wird. Optional kann der Laser des scannenden Lasersystems ebenfalls genutzt werden, um den Scharfschützen zu stören (d.h. der Laser wird als Störsignal 125 genutzt). Gleiches ist möglich für das Erkennen einer Waffenanlage, wobei ebenfalls ein separates Laserscansystem genutzt werden kann oder aber das gleiche System genutzt werden kann, welches zum Stören der Zielerfassung genutzt wird (d.h. das Störsignal).

Bei weiteren Ausführungsbeispielen ist der optische Störer 120 ausgebildet zum Selbstschutz von Landfahrzeugen, von fliegenden Plattformen oder von Seefahrzeugen oder auch zum Objektschutz als selbständiges Gerät zum Schutz von gefährdeten Objekten, wie beispielsweise Lagern, Flughäfen, ungeschützten Landfahrzeugen, etc.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### Bezugszeichenliste

- 10: Schütze/Objekt/optisches Visier einer Zielerfassungseinheit
- 50: Detektor
- 100: System zum Stören einer Zielerfassung
- 105: Detektionssignal
- 110: Warneinrichtung
- 115: Warnung
- 120: optischer Störer
- 125: Störsignal
- 130: Richteinrichtung
- 140: Spektralanalysator eines Hintergrundes

## Patentansprüche

1. System (100) zum Stören einer Zielerfassung, die von einer Position ausgeht und durch einen Detektor (50) detektierbar ist, wobei der Detektor (50) ansprechend auf die Zielerfassung ein Detektionssignal (105) bereitstellt, mit folgenden Merkmalen:
eine Warneinrichtung (110) zum Ausgeben einer Warnung (115) basierend auf dem Detektionssignal (105);
einen optischen Störer (120), der ausgebildet ist, um zumindest ein Störsignal (125) bereitzustellen; und
eine Richteinrichtung (130), die ausgebildet ist, um in Antwort auf die ausgegebene Warnung (115) das Störsignal (125) auf die Position zu richten, um die Zielerfassung zu verhindern oder zumindest zu erschweren,
wobei das System (10)
eine Einrichtung (140) zur Bestimmung eines spektralen Bereiches einer Strahlung aus einem räumlichen Bereich umfasst, der gegenüberliegend zu einer Richtung liegt, in die die Richteinrichtung (130) in der Lage ist, das Störsignal (125) auszurichten,
wobei der optische Störer (120) ausgebildet ist, um ein multispektrales Lichtsignal als Störsignal (125) bereitzustellen, wobei der optische Störer (120) weiter ausgebildet ist, um das Störsignal (125) mit einer Wellenlänge bereitzustellen, die durch schaltbare Wellenlängen variierbar ist, und in Abhängigkeit des bestimmten spektralen Bereiches das Störsignal (125) zu ändern.

2. System (100) nach Anspruch 1, wobei der optische Störer (120) ausgebildet ist, das Störsignal (125) mit einer Wellenlänge oder Intensität oder Pulsrate bereitzustellen, die zu einer Reduktion des Kontrastes bei der Zielerfassung führt und insbesondere im sichtbaren oder im infraroten Spektralbereich liegt.

3. System (100) nach einem der vorhergehenden Ansprüche, die weiter Folgendes umfasst:
eine Entfernungsmesseinrichtung, die ausgebildet ist, um eine Entfernung zu der Position zu ermitteln,
wobei der optische Störer (120) ausgebildet ist, um in Abhängigkeit der gemessenen Entfernung das Störsignal (125) zu ändern.

4. System (100) nach einem der vorhergehenden Ansprüche, wobei die Richteinrichtung (130) ausgebildet ist, um stationäre oder fliegende oder sich bewegende Objekte während ihrer Bewegung zu verfolgen und das Störsignal (125) über eine Mindestzeitdauer auf das bewegte Objekt zu richten, und/oder weiter ausgebildet ist, durch eine Strahlablenkung einen Ort von zumindest einer Komponente des Systems (100) zu verschleiern.

5. System (100) nach einem der vorhergehenden Ansprüche, wobei der Detektor ein Bestandteil des Systems (100) ist.

6. System (100) nach einem der vorhergehenden Ansprüche, das weiter zumindest eine der folgenden Einheiten umfasst:
- einen Mündungsfeuerdetektor,
- einen Flugkörperwarner zur Detektion anfliegender Flugobjekte,
- einen Laserwarner zur Detektion lasergelenkter Flugkörper,
- ein scannendes Lasersystem zur Detektion von Visiereinrichtungen durch Rückreflektionen eines ausgesandten Laserstrahls.

7. System (100) nach Anspruch 6, wobei
das scannende Lasersystem ausgebildet ist, den Laserstrahl als Störsignal (125) bereitzustellen, oder
der optischen Störer (120), die Richteinrichtung (130) und der Detektor (50) als scannendes Lasersystem ausgebildet sind.

8. Verfahren zum Stören einer Zielerfassung, die von einer Position ausgeht und durch einen Detektor (50) detektierbar ist, wobei der Detektor (50) ansprechend auf die Zielerfassung ein Detektionssignal (105) bereitstellt, mit folgenden Schritten:
Ausgeben einer Warnung (115), wenn der Detektor (50) ein Detektionssignal (105) ausgibt; und
in Antwort auf das Ausgegeben der Warnung (115), Ausrichten eines Störsignals (125) auf die Position, um die Zielerfassung zu verhindern oder zumindest zu erschweren,
Bestimmen eines spektralen Bereiches einer Strahlung aus einem räumlichen Bereich, der gegenüberliegend zu einer Richtung liegt, in die die Richteinrichtung (130) in der Lage ist, das Störsignal (125) auszurichten, wobei das Störsignal (125) ein multispektrales Lichtsignal umfasst und das Störsignal (125) mit einer Wellenlänge bereitgestellt wird, die durch schaltbare Wellenlängen variierbar ist, und in Abhängigkeit des bestimmten spektralen Bereiches das Störsignal (125) geändert wird.

## Claims

1. System (100) for jamming a target acquisition which originates from a position and can be detected by a detector (50), wherein the detector (50) provides a detection signal (105) in response to the target acquisition, comprising the following features:
a warning device (110) for outputting a warning (115) based on the detection signal (105); an optical jammer (120) which is designed to provide at least one jamming signal (125); and
a directing device (130) which is designed to direct the jamming signal (125) to the position in response to the output warning (115), in order to prevent or at least impede the target acquisition,
wherein the system (10) comprises a device (140) for determining a spectral range of radiation from a spatial region which is opposite to a direction in which the directing device (130) is able to direct the jamming signal (125),
wherein the optical jammer (120) is designed to provide a multispectral light signal as the jamming signal (125),
wherein the optical jammer (120) is further designed to provide the jamming signal (125) having a wavelength which can be varied by switchable wavelengths, and to change the jamming signal (125) depending on the determined spectral range.

2. System (100) according to claim 1, wherein the optical jammer (120) is designed to provide the jamming signal (125) having a wavelength or intensity or pulse rate which leads to a contrast reduction during target acquisition and in particular is in the visible or infrared spectral range.

3. System (100) according to either of the preceding claims, further comprising the following: a distance measuring device which is designed to determine a distance to the position, wherein the optical jammer (120) is designed to change the jamming signal (125) depending on the measured distance.

4. System (100) according to any of the preceding claims, wherein the directing device (130) is designed to track stationary or flying or moving objects during the movement thereof and to direct the jamming signal (125) to the moving object for a minimum period of time, and/or is further designed to conceal a position of at least one component of the system (100) by beam deflection.

5. System (100) according to any of the preceding claims, wherein the detector is a component of the system (100).

6. System (100) according to any of the preceding claims, further comprising at least one of the following units:
- a muzzle flash detector,
- a missile warning unit for detecting approaching flying objects,
- a laser warning unit for detecting laser-guided missiles,
- a scanning laser system for detecting sighting devices by means of retroreflections of an emitted laser beam.

7. System (100) according to claim 6, wherein
the scanning laser system is designed to provide the laser beam as the jamming signal (125), or
the optical jammer (120), the directing device (130) and the detector (50) are designed as a scanning laser system.

8. Method for jamming a target acquisition which originates from a position and can be detected by a detector (50), wherein the detector (50) provides a detection signal (105) in response to the target acquisition, comprising the following steps:
outputting a warning (115) when the detector (50) outputs a detection signal (105); and
directing a jamming signal (125) to the position in response to the output of the warning (115), in order to prevent or at least impede the target acquisition,
determining a spectral range of radiation from a spatial region which is opposite to a direction in which the directing device (130) is able to direct the jamming signal (125),
wherein the jamming signal (125) comprises a multispectral light signal and the jamming signal (125) is provided having a wavelength which can be varied by switchable wavelengths, and the jamming signal (125) is changed depending on the determined spectral range.

## Revendications

1. Système (100) permettant la perturbation d'une détection de cible qui part d'une position et peut être détectée par un capteur (50), le capteur (50) fournissant un signal de capteur (105) en réaction à la détection de la cible, comportant les caractéristiques suivantes :
un dispositif d'avertissement (110) permettant d'émettre un avertissement (115) sur la base du signal de capteur (105) ;
un perturbateur optique (120) qui est conçu pour fournir au moins un signal de perturbation (125) ; et
un dispositif directionnel (130) qui est conçu pour diriger le signal de perturbation (125) vers la position, en réponse à l'avertissement émis (115), afin d'empêcher ou au moins de rendre plus difficile la détection de la cible,
le système (10) comprenant un dispositif (140) permettant la détermination d'une plage spectrale d'un faisceau à partir d'une zone spatiale qui est située à l'opposé d'une direction dans laquelle le dispositif directionnel (130) est en mesure d'orienter le signal de perturbation (125),
le perturbateur optique (120) étant conçu pour fournir un signal lumineux multispectral en tant que signal de perturbation (125),
le perturbateur optique (120) étant en outre conçu pour fournir le signal de perturbation (125) avec une longueur d'onde qui est variable par des longueurs d'onde commutables et pour modifier le signal de perturbation (125) en fonction de la plage spectrale déterminée.

2. Système (100) selon la revendication 1, dans lequel le perturbateur optique (120) est conçu pour fournir le signal de perturbation (125) avec une longueur d'onde ou une intensité ou une fréquence d'impulsion qui conduit à une réduction du contraste lors de la détection de la cible et qui est située en particulier dans la plage spectrale visible ou infrarouge.

3. Système (100) selon l'une des revendications précédentes, comprenant en outre :
un dispositif de mesure de distance, qui est conçu pour déterminer une distance à la position, le perturbateur optique (120) étant conçu pour modifier le signal de perturbation (125) en fonction de la distance mesurée.

4. Système (100) selon l'une des revendications précédentes, dans lequel
le dispositif directionnel (130) est conçu pour suivre des objets stationnaires ou volants ou en mouvement pendant leur mouvement et pour diriger le signal de perturbation (125) sur l'objet mobile pendant une durée minimale, et/ou est en outre conçu pour masquer un emplacement d'au moins un composant du système (100) par une déviation du faisceau.

5. Système (100) selon l'une des revendications précédentes, dans lequel le capteur est un constituant du système (100).

6. Système (100) selon l'une des revendications précédentes, comprenant en outre au moins l'une des unités suivantes :
- un capteur de lueur de bouche,
- un avertisseur de missiles permettant la détection d'objets volants à l'approche,
- un avertisseur laser permettant la détection de missiles à guidage laser,
- un système laser à balayage permettant la détection de dispositifs de visée par des réflexions arrière d'un faisceau laser émis.

7. Système (100) selon la revendication 6, dans lequel
le système laser à balayage est conçu pour fournir le faisceau laser en tant que signal de perturbation (125), ou
le perturbateur optique (120), le dispositif directionnel (130) et le capteur (50) sont conçus en tant que système laser à balayage.

8. Procédé de perturbation d'une détection de cible qui part d'une position et peut être détectée par un capteur (50), le capteur (50) fournissant un signal de capteur (105) en réaction à la détection de la cible, comportant les étapes suivantes :
émettre un avertissement (115) si le capteur (50) émet un signal de capteur (105) ; et
en réponse à l'émission de l'avertissement (115), orienter un signal de perturbation (125) vers la position afin d'empêcher ou au moins de rendre plus difficile la détection de la cible,
déterminer une plage spectrale d'un faisceau à partir d'une zone spatiale qui est opposée à une direction dans laquelle le dispositif directionnel (130) est en mesure d'orienter le signal de perturbation (125),
le signal de perturbation (125) comprenant un signal lumineux multispectral et le signal de perturbation (125) étant fourni avec une longueur d'onde qui est variable par des longueurs d'onde commutables, et le signal de perturbation (125) étant modifié en fonction de la plage spectrale déterminée.
